# EUROPÄISCHE PATENTSCHRIFT

(11) **EP 3 422 494 B1**
(45) Veröffentlichungstag und Bekanntmachung des Hinweises auf die Patenterteilung: **26.01.2022**
(21) Anmeldenummer: 18180333.9
(22) Anmeldetag: 28.06.2018
(51) Int. Cl.: H01R 43/28, H01B 15/00, H02G 1/12, B26D 3/00, B26D 7/01

(54) **ABTRENNVORRICHTUNG SOWIE VERFAHREN ZUM ABTRENNEN EINER KABELTÜLLE VON EINEM KABEL**
DISCONNECTING DEVICE AND METHOD FOR DISCONNECTING A CABLE SLEEVE FROM A CABLE
DISPOSITIF DE DÉCONNEXION ET PROCÉDÉ DE DÉCONNEXION D'UN PASSE-CÂBLE D'UN CÂBLE

(30) Priorität: 29.06.2017 DE 102017114572
(43) Veröffentlichungstag der Anmeldung: 02.01.2019
(73) Patentinhaber: Komax SLE GmbH & Co. KG, 94481 Grafenau (DE)
(72) Erfinder: Köberl, Jürgen, 94116 Hutthurm (DE)
(74) Vertreter: Lichtnecker, Markus Christoph

(56) Entgegenhaltungen:
- DE-C- 962 717
- FR-A- 1 244 131
- US-A- 2 434 640
- US-A- 2 743 633
- US-B1- 6 418 826

## Beschreibung

Die Erfindung betrifft eine Abtrennvorrichtung sowie ein Verfahren zum Abtrennen einer Kabeltülle von einem Kabel.

Kabel, welche beispielsweise in Fahrzeugen verbaut werden, weisen häufig einen Außenleiter auf. Das Schirmgeflecht ist durch eine Kabeltülle geschützt, um z.B. während des Transports nicht beschädigt zu werden.

Wird das Kabel verarbeitet bzw. mit einem Kontakt versehen, muss vorher die Kabeltülle entfernt werden. Dies geschieht bisher rein manuell, was mit hohen Kosten verbunden ist.

Eine Automatisierung war bisher nicht möglich. Dies lag vor allem an der Gefahr, das Kabel beim Entfernen der Kabeltülle zu beschädigen. Würde ohne weitere Anpassung einfach ein Messer automatisch zur Kabeltülle geführt werden, wäre das Risiko einer Beschädigung des Kabels sehr hoch.

US 2,743,633 A offenbart eine Vorrichtung zum Abtrennen einer Kabelhülle von einem Kabel. Mittels Balken kann ein Schneidabschnitt der Hülle vom Kabel beabstandet werden. Ein Messer kann den Schneidabschnitt von außen aufschneiden.

Es ist daher eine Aufgabe der Erfindung, eine Abtrennvorrichtung sowie ein Verfahren zu schaffen, mit der bzw. mit dem eine Kabeltülle automatisch von einem Kabel abgetrennt werden kann, ohne das Kabel dabei zu beschädigen.

Die Lösung dieser Aufgabe erfolgt durch die Abtrennvorrichtung sowie das Verfahren der unabhängigen Ansprüche.

Erfindungsgemäß umfasst die Abtrennvorrichtung zum Abtrennen insbesondere Entfernen einer Kabeltülle von einem Kabel eine Schneideinheit und eine Beabstandungsvorrichtung.

Bei dem Kabel kann es sich beispielsweise um eine symmetrische oder unsymmetrische Leitung handeln. Das Kabel kann insbesondere mehradrig, geschirmt oder ungeschirmt sein. Beispielsweise kann es sich bei dem Kabel um ein Datenkabel, insbesondere eine High Speed Data (HSD) Leitung mit geschäumtem oder massivem Dielektrikum, handeln.

Ferner können die Isolatoren des Kabels in den Varianten Buchse, Stecker und/oder Winkel ausgeführt sein. Der Begriff Kabel ist breit zu verstehen und umfasst auch beispielsweise mit dem Kabel verbundene bzw. daran angeordnete Verbindungen wie Stecker oder dergleichen.

Das Kabel kann beispielsweise in einem Fahrzeug verbaut werden. Zum Schutz des Schirmgeflechts ist das Kabel, insbesondere für vorangehende Arbeitsschritte und das Einlegen des Kabels in die eigentliche Verarbeitungsstation, mit einer Kabeltülle versehen. Die Kabeltülle kann beispielsweise aus einem Gummimaterial bestehen.

Die Beabstandungsvorrichtung ist dazu ausgebildet, zumindest einen Schneidabschnitt der Kabeltülle vom Kabel zu beabstanden. Es wird somit ein Zwischenraum zwischen der Kabeltülle und dem Kabel geschaffen. Die Kabeltülle bildet gewissermaßen eine Wulst.

Die Schneideinheit ist dazu ausgebildet, den Schneidabschnitt der Kabeltülle aufzuschneiden, wobei eine Schneide der Schneideinheit schräg orientiert ist und vom Kabel weg zeigt, um die Kabeltülle von innen nach außen aufzuschneiden.

Erfindungsgemäß kann die Schneideinheit in den Zwischenraum zwischen der Kabeltülle und dem Kabel eingeführt werden, um die Kabeltülle aufzuschneiden.

Die Kabeltülle kann auf diese Weise automatisch, vorzugsweise vollautomatisch, vom Kabel abgetrennt werden. Es ist auch möglich, dass die Abtrennung teilautomatisch erfolgt und manuelle Schritte umfasst.

Es war überaus überraschend, dass durch die Beabstandungsvorrichtung ein automatisiertes Abtrennen erreicht werden kann, ohne das Kabel selbst zu beschädigen.

Durch die zumindest teilweise Automatisierung des Abtrennvorgangs können Zeit und Kosten eingespart werden.

Weiterbildungen der Erfindung sind auch den abhängigen Ansprüchen, der Beschreibung sowie den beigefügten Zeichnungen zu entnehmen.

Gemäß einer Ausführungsform umfasst die Beabstandungsvorrichtung eine Klemmvorrichtung. Die Klemmvorrichtung kann die Kabeltülle zusammenklemmen, sodass der Schneidabschnitt vom Kabel beabstandet wird. Ein kontinuierliches und effizientes Entfernen von Kabeltüllen wird dadurch ermöglicht.

Alternativ kann der Schneidabschnitt auch auf andere Weise beabstandet werden, z.B. mittels einer Unterdruckeinrichtung. So kann der Schneidabschnitt beispielsweise angesaugt und vom Kabel weggesogen werden.

Ferner kann die Beabstandungsvorrichtung eine Ziehvorrichtung umfassen. Der Schneidabschnitt kann an der Ziehvorrichtung befestigt und anschließend vom Kabel weggezogen werden. Die Befestigung kann beispielsweise mittels Nadeln erfolgen, welche in den Schneidabschnitt eindringen.

Die Beabstandungsvorrichtung kann auch eine Fördervorrichtung umfassen. Beispielsweise kann wenigstens ein Förderband oder Förderriemen die Kabeltülle am Schneidabschnitt vom Kabel wegziehen. Die Fördervorrichtung kann vorzugsweise ein reibungserhöhtes Material aufweisen, insbesondere spikesartige Nadeln. Vorzugsweise können zwei Fördervorrichtungen an gegenüberliegenden Seiten vorgesehen sein, um einen Wulst zu schaffen.

Nach einer weiteren Ausführungsform umfasst die Klemmvorrichtung wenigstens zwei Klemmbacken. Die Klemmbacken sind vorzugweise an gegenüberliegenden Seiten vorgesehen, um die Kabeltülle von zwei Seiten her einzuklemmen. Die Klemmvorrichtung ist vorzugsweise als Parallelgreifer ausgebildet.

Jede Klemmbacke kann auch in, insbesondere relativ zueinander bewegbare, Segmente unterteilt sein. Beispielsweise kann ein Segment einen Aufnahmebereich bilden, welcher einen unbeabstandeten Kabeltüllenbereich aufnimmt und hält. Ein weiteres Segment kann als Deformationsabschnitt zum Deformieren des Schneidabschnitts ausgebildet sein.

Gemäß einer weiteren Ausführungsform weist die Klemmvorrichtung für jede Klemmbacke einen, insbesondere verstellbaren, Anschlag auf. Das Schließmaß der Klemmbacken kann dadurch auf einfache Weise an den Durchmesser des Kabels bzw. der Kabeltülle angepasst werden. Unterschiedliche Kabel können somit mit derselben Vorrichtung bearbeitet werden. Das Kabel selbst wird dabei nicht deformiert und/oder beschädigt.

Der Anschlag kann einen Anschlagsstift umfassen, welcher einem weiteren Schließen der Klemmbacke entgegenwirkt. Alternativ kann auch eine Steuerung vorgesehen sein, welche die Klemmbacken nur bis zu einer gewünschten Position schließt.

Nach einer weiteren Ausführungsform weist die Klemmvorrichtung, vorzugsweise eine Klemmbacke oder beide Klemmbacken, einen Aufnahmebereich zur Aufnahme eines unbeabstandeten Kabeltüllenbereichs und einen Deformationsabschnitt zum Deformieren des Schneidabschnitts auf. Der Aufnahmebereich und der Deformationsabschnitt können als separate Segmente ausgebildet sein. Insbesondere können die Segmente relativ zueinander, vorzugsweise unabhängig voneinander, bewegt werden.

Alternativ können der Aufnahmebereich und der Deformationsabschnitt auch einstückig ausgebildet sein und eine gemeinsame Klemmbacke bilden.

Die Form des Deformationsabschnitts und die Form des Aufnahmebereichs unterscheiden sich vorzugsweise. Insbesondere kann der Deformationsabschnitt zumindest teilweise einen kleineren Radius als der Aufnahmebereich aufweisen. Die Klemmbacke kann sich somit z.B. im Deformationsabschnitt verjüngen. Auch kann der Deformationsabschnitt beispielsweise einen oder mehrere Vorsprünge in Richtung der Kabeltülle aufweisen.

Es war überraschend, dass ein entsprechend geformter Deformationsabschnitt die Bildung der Wulst deutlich verbessert, ohne das Kabel dabei zu stark zu verformen. Die Wulst kann folglich zuverlässig geformt werden, wodurch auch mögliche Probleme bei einem automatisierten Abtrennen deutlich reduziert werden können.

Der Aufnahmebereich kann an die Form der Kabeltülle angepasst sein und bei eingeführtem Kabel vorzugsweise flächig aufliegen. Entsprechend kann der Deformationsabschnitt an die Form der Wulst angepasst sein und vorzugsweise flächig daran aufliegen.

Der Wulst kann sich rein durch das Zusammenklemmen der Klemmbacken bilden. Zusätzlich kann der Deformationsabschnitt insbesondere auch eine Bewegung weg vom Kabel ausführen, um den Schneidabschnitt aktiv wegzuziehen, z.B. mittels einer Fördervorrichtung.

Gemäß einer weiteren Ausführungsform ist eine Kabelhaltevorrichtung vorgesehen, welche relativ zur Beabstandungsvorrichtung bewegbar ist. Die Bewegung kann in einer horizontalen Ebene erfolgen. Zum Abtrennen der Kabeltülle wird das Kabel in Richtung Beabstandungsvorrichtung bewegt. Ist die Kabeltülle abgetrennt, kann das Kabel entgegengesetzt, also wieder von der Beabstandungsvorrichtung weg bewegt werden. Vorher kann insbesondere eine senkrechte Bewegung der Klemmvorrichtung samt Kabeltülle nach unten erfolgen.

Der Antrieb für die Kabelhalterung kann insbesondere pneumatisch, hydraulisch, elektrisch und/oder mechanisch erfolgen, z.B. mittels eines Pneumatikzylinders oder eines Servomotors.

Nach einer weiteren Ausführungsform ist die Schneideinheit relativ zur Beabstandungsvorrichtung bewegbar. Die Bewegung kann in einer horizontalen Ebene erfolgen. Zum Abtrennen der Kabeltülle wird die Schneideinheit in Richtung Beabstandungsvorrichtung bewegt. Ist die Kabeltülle aufgeschnitten, kann die Schneideinheit entgegengesetzt, also wieder von der Beabstandungsvorrichtung weg bewegt werden.

Der Antrieb für die Schneideinheit kann insbesondere pneumatisch, hydraulisch, elektrisch und/oder mechanisch erfolgen, z.B. mittels eines Pneumatikzylinders oder eines Servomotors.

Gemäß einer weiteren Ausführungsform ist die Schneideinheit höhenverstellbar ausgebildet. Die Schneideinheit kann insbesondere in einer vertikalen Ebene verstellt werden. Beispielsweise kann eine vertikale Führung vorgesehen sein, an der die Schneideinheit mittels Schrauben, insbesondere Rändelschrauben, befestigt werden kann. Die Position der Schneideinheit kann somit an einen jeweiligen Kabeltyp angepasst werden.

Das Einstellen der Schneideinheit kann manuell oder automatisch erfolgen. Beispielsweise kann die Position des Kabels bzw. des Schneidabschnitts automatisch erfasst werden, z.B. mittels einer Kamera, und die Höhe der Schneideinheit entsprechend eingestellt werden.

Die Schneideinheit kann insbesondere eine Schneide aufweisen. So kann die Schneideinheit ein Schneidmesser umfassen.

Beispielsweise kann die Schneide als Skalpell ausgebildet sein. Es war überraschend, dass eine entsprechend geformte Schneide auch bei einem automatisierten Abtrennvorgang einerseits die Kabeltülle aufschneiden kann, ohne andererseits das Kabel selbst zu beschädigen.

Nicht erfindungsgemäß kann die Schneideinheit einen Laser aufweisen. Durch einen Laser kann die Kabeltülle sehr präzise aufgeschnitten werden. Auch die Schnitttiefe lässt sich präzise einstellen.

Nach einer weiteren Ausführungsform umfasst die Schneideinheit eine, insbesondere als Dorn ausgebildete, Einfädelhilfe. Die Einfädelhilfe erleichtert ein Einfädeln einer Schneide in den Zwischenraum zwischen der Kabeltülle und dem Kabel. Dazu kann die Einfädelhilfe über die Schneide vorstehen.

Die Einfädelhilfe ist vorzugsweise zwischen der Schneide und dem Kabel angeordnet. Insbesondere kann die Einfädelhilfe einen unteren Abschluss für die Schneide bilden. So kann die Einfädelhilfe auch als Schutz für das Kabel, insbesondere für das Schirmgeflecht, dienen. Auf diese Weise kann verhindert werden, dass das Kabel beim Abtrennen beschädigt wird. Die Einfädelhilfe erfüllt somit eine Doppelfunktion.

Erfindungsgemäß ist eine Schneide der Schneideinheit schräg orientiert, insbesondere wobei der Abstand der Schneide von einem vorderen Bereich einer Einfädelhilfe zu einem hinteren Bereich der Einfädelhilfe zunimmt.

Die Schneide zeigt erfindungsgemäß vom Kabel weg, z.B. nach oben. Die Kabeltülle wird von innen nach außen aufgeschnitten. Beschädigungen des Kabels werden auf diese Weise verhindert. Die Orientierung der Schneide bildet daher einen zur Einfädelhilfe zusätzlichen Schutz des Kabels.

Nicht erfindungsgemäß kann die Kabeltülle jedoch auch von außen nach innen aufgeschnitten werden. Dabei kann der Abstand der Schneide von einem hinteren Bereich einer Einfädelhilfe zu einem vorderen Bereich der Einfädelhilfe zunehmen. Die Schneide und die Einfädelhilfe können hierbei gewissermaßen V-förmig angeordnet sein. Die Einfädelhilfe verhindert dabei eine Beschädigung des Kabels.

Auch eine vertikale Orientierung der Schneide ist nicht erfindungsgemäß grundsätzlich denkbar. Um Beschädigungen des Kabels zu vermeiden, kann eine rechtwinklig zur Schneide orientierte Einfädelhilfe als Schutz dienen.

Nach einer weiteren Ausführungsform ist eine Tüllenhalterung vorgesehen, die dazu ausgebildet ist, die aufgeschnittene Kabeltülle auseinanderzuziehen und/oder in einer auseinandergezogenen Position zu halten. Beispielsweise können Greifer vorgesehen sein, welche in den beim Abtrennen entstehenden Spalt eingreifen und die Schenkel der Kabeltülle auseinanderziehen. Der Antrieb für die Greifer kann insbesondere pneumatisch, hydraulisch, elektrisch und/oder mechanisch erfolgen, z.B. mittels eines Pneumatikzylinders oder eines Servomotors.

Alternativ kann auch ein Bürstenpaar vorgesehen sein, welche die aufgeschnittene Kabeltülle entfernen kann. Beispielsweise durch das Bürstenpaar in einer Bewegung von oben nach unten die Kabeltülle abgestreift werden.

Gemäß einer weiteren Ausführungsform umfasst die Tüllenhalterung eine Unterdruckeinrichtung. Es wird dabei insbesondere ein Vakuum erzeugt, welches mit der Außenwandung des Schneidabschnitts der Kabeltülle in Verbindung steht. Die Schenkel der aufgetrennten Kabeltülle können auf diese Weise auseinandergezogen und in dieser Position gehalten werden, beispielsweise bis das Kabel, vorzugsweise mittels der Kabelhaltevorrichtung, wegbewegt ist.

Wird der Unterdruck ausgeglichen, löst sich die Kabeltülle und fällt z.B. in einen Behälter. Die Abtrennvorrichtung ist auf diese Weise sofort wieder einsatzbereit. Ein kontinuierliches, automatisches Arbeiten wird dadurch sichergestellt.

Nach einer weiteren Ausführungsform ist zumindest ein Teil der Tüllenhalterung, insbesondere eine Klemmvorrichtung, höhenverstellbar ausgebildet. Vorzugsweise kann die aufgeschnittene Kabeltülle relativ, insbesondere senkrecht, zum Kabel bewegt werden. Die Klemmvorrichtung wird somit vorzugsweise abgesenkt, sodass sich die Kabeltülle vom Kabel löst.

Die Höhenverstellung kann insbesondere pneumatisch, hydraulisch, elektrisch und/oder mechanisch erfolgen.

Nach einer weiteren Ausführungsform weist die Beabstandungsvorrichtung, vorzugsweise eine Klemmbacke einer Klemmvorrichtung, zumindest eine Öffnung auf. Insbesondere ist die Öffnung mit einer Unterdruckeinrichtung verbunden oder verbindbar.

Sind die Schenkel der aufgetrennten Kabeltülle über die Öffnungen angesaugt, werden diese bei einer Bewegung der Klemmbacken ebenfalls mitbewegt und auf diese Weise auseinandergezogen. Ein zusätzlicher Antrieb ist nicht notwendig. Die Beabstandungsvorrichtung erfüllt somit eine Doppelfunktion, da diese einerseits die Wulst erzeugt und anderseits dazu beiträgt, die Schenkel auseinanderzubewegen.

Es war überraschend, dass durch eine entsprechende Positionierung der Öffnung bzw. der Öffnungen die Schenkel der aufgetrennten Kabeltüllen sicher an der Beabstandungsvorrichtung gehalten werden können.

Die Erfindung betrifft auch ein Verfahren zum Abtrennen und/oder Entfernen einer Kabeltülle von einem Kabel mit einer erfindungsgemäßen Abtrennvorrichtung, bei dem die Beabstandungsvorrichtung zumindest einen Schneidabschnitt der Kabeltülle vom Kabel beabstandet und die Schneideinheit den Schneidabschnitt der Kabeltülle von innen nach außen aufschneidet.

Nach einem bevorzugten Verfahren kann das Kabel mittels einer Kabelhaltevorrichtung zur Beabstandungsvorrichtung bewegt werden. Klemmbacken einer Klemmvorrichtung können dabei, vorzugsweise bis zu einem Anschlag, aufeinander zu bewegt werden und die Kabeltülle einklemmen. Durch die Form der Klemmbacken kann sich der Schneidabschnitt an einem Deformationsabschnitt deformieren und eine Wulst bilden.

Eine Schneide einer Schneideinheit kann in den Abstand zwischen dem Schneidabschnitt der Kabeltülle und dem Kabel bewegt werden. Eine Einfädelhilfe kann das Einführen der Schneide erleichtern.

Die Bewegung der Schneide erfolgt insbesondere in Richtung des Isolators des Kabels. Sowohl die Leitung, das Schirmgeflecht, der Mantel als auch der Isolator werden somit auch dann nicht beschädigt, wenn die Einfädelhilfe mit diesem in Kontakt kommt.

Die Schneide wird relativ zum Kabel bewegt und schneidet dadurch die Kabeltülle auf. Eine Unterdruckeinrichtung hält die Schenkel der aufgeschnittenen Kabeltülle an den Klemmbacken.

Ist die Kabeltülle aufgeschnitten, werden die Klemmbacken auseinander bewegt. Das Kabel wird mittels der Kabelhalterung von den Klemmbacken weg bewegt, während die Kabeltülle aufgrund des Unterdrucks daran haften bleibt. Auch die Schneide wird in die Ausgangsposition zurück bewegt.

Um die aufgeschnittene und geöffnete Kabeltülle sicher vom Kabel zu entfernen, wird die Beabstandungsvorrichtung mit den Klemmbacken und der angesaugten Kabeltülle z.B. senkrecht abgesenkt.

Die Kabeltülle ist vom Kabel abgetrennt. Es kann nun ein Druckausgleich erfolgen, sodass sich die Kabeltülle von den Klemmbacken löst und z.B. in einen Abfallbehälter fällt.

Anschließend wird die Beabstandungsvorrichtung wieder in ihre Grundposition gefahren.

Ein neues Kabel samt Kabeltülle kann in die Kabelhalterung eingelegt werden und das beschriebene Verfahren wiederholt werden. Kabeltüllen können auf diese Weise automatisch abgetrennt werden.

Alle hier beschriebenen Ausführungsformen und Bauteile der Vorrichtung sind insbesondere dazu ausgebildet, z.B. mittels einer Steuerungsvorrichtung, nach dem hier beschriebenen Verfahren betrieben zu werden. Ferner können alle hier beschriebenen Ausführungsformen der Vorrichtung sowie alle hier beschriebenen Ausführungsformen des Verfahrens jeweils miteinander kombiniert werden, insbesondere auch losgelöst von der konkreten Ausgestaltung, in deren Zusammenhang sie erwähnt werden.

Die Erfindung wird im Folgenden beispielhaft unter Bezugnahme auf die Zeichnungen beschrieben. Es zeigen:
- Fig. 1: eine schematische Draufsicht einer Ausführungsform einer erfindungsgemäßen Abtrennvorrichtung,
- Fig. 2: eine schematische Seitenansicht der Abtrennvorrichtung gemäß Fig. 1,
- Fig. 3: eine Vorderansicht einer Beabstandungsvorrichtung der Abtrennvorrichtung gemäß Fig. 1 in einer ersten Position,
- Fig. 4: eine Vorderansicht einer Beabstandungsvorrichtung der Abtrennvorrichtung gemäß Fig. 1 in einer zweiten Position,
- Fig. 5: eine Detailansicht der Beabstandungsvorrichtung gemäß Fig. 4,
- Fig. 6: eine Perspektivansicht einer an einem Kabel angeordneten Kabeltülle in einer ersten Position,
- Fig. 7: eine Perspektivansicht der Kabeltülle gemäß Fig. 6 in einer zweiten Position,
- Fig. 8: eine Vorderansicht einer Tüllenhalterung der Abtrennvorrichtung gemäß Fig. 1,
- Fig. 9: eine schematische Seitenansicht der Abtrennvorrichtung gemäß Fig. 1, und
- Fig. 10 bis 19: Seiten- bzw. Vorderansichten einer Ausführungsform einer erfindungsgemäßen Abtrennvorrichtung in verschiedenen Positionen.

Zunächst ist zu bemerken, dass die dargestellten Ausführungsformen rein beispielhafter Natur sind. Die Merkmale einer Ausführungsform können auch beliebig mit Merkmalen einer anderen Ausführungsform kombiniert werden.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

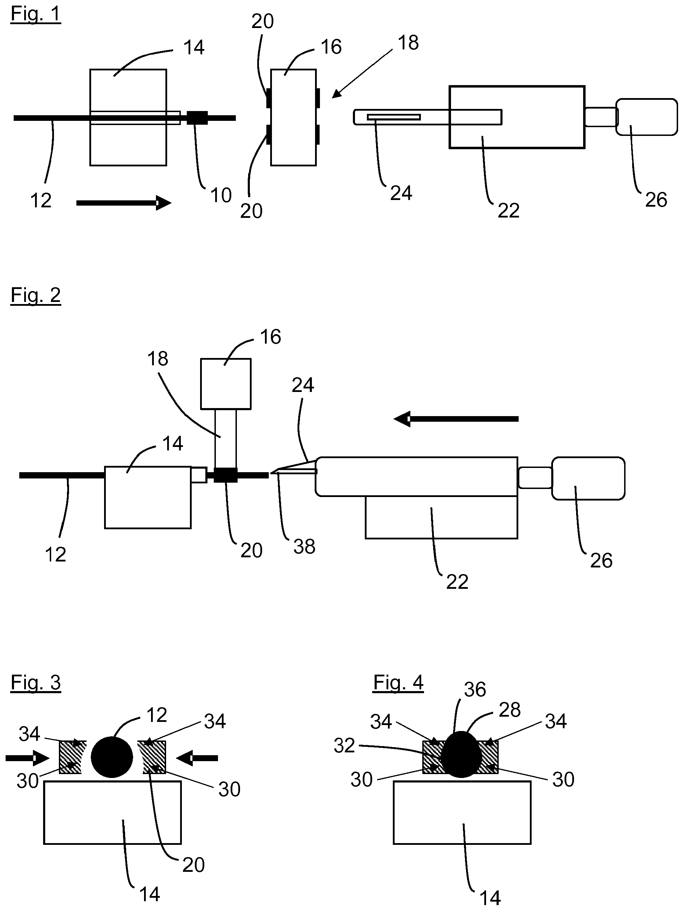

Fig. 1 zeigt eine Abtrennvorrichtung zum Abtrennen einer Kabeltülle 10 von einem Kabel 12. Das Kabel 12 ist in einer als Referenzklotz 14 ausgebildeten Kabelhaltevorrichtung eingespannt, welche, beispielsweise pneumatisch oder elektrisch, in Pfeilrichtung zu einer Beabstandungsvorrichtung 16 bewegt werden kann. Das Kabel 12 kann hierbei insbesondere in einer Vertiefung eingelegt sein.

Die Beabstandungsvorrichtung 16 umfasst eine als Parallelgreifer 18 ausgebildete Klemmvorrichtung mit zwei Klemmbacken 20.

Eine Schneideinheit 22 mit einer Schneide 24 kann von der gegenüberliegenden Seite zur Beabstandungsvorrichtung 16 bewegt werden. Als Antrieb 26 kann beispielsweise ein Pneumatikzylinder dienen.

Wie in Fig. 2 dargestellt ist, wird das Kabel 12 samt Kabeltülle 10 zunächst in die Beabstandungsvorrichtung 16 eingeführt. Die Klemmbacken 20 der Klemmvorrichtung 18 schließen sich und quetschen die Kabeltülle 10 leicht von beiden Seiten. Die Kraft ist hierbei so gering, dass das Kabel 12 nicht verletzt wird. Das Schließmaß kann über zwei Anschlagstifte in den Klemmbacken 20 an das jeweilige Kabel 12 angepasst werden.

Wie in Fig. 3 und Fig. 4 zu sehen ist, entsteht beim Zusammendrücken der Klemmbacken 20 eine Wulst 28 in der Kabeltülle 10. Die spezielle Kontur der Klemmbacken 20 und ihre auf das eingespannte Kabel 10 bezogene Position verstärken den Effekt und ermöglichen im Weiteren das Einfädeln der Schneide 24.

Jede Klemmbacke 20 weist einen Aufnahmebereich 30 zur Aufnahme eines unbeabstandeten Kabeltüllenbereichs 32 und einen Deformationsabschnitt 34 zum Deformieren eines Schneidabschnitts 36 auf.

Der Deformationsabschnitt 34 weist einen kleineren Radius als der Aufnahmebereich 30 auf.

Der Aufnahmebereich 30 ist an die Form der Kabeltülle 10 angepasst und kann an dieser flächig anliegen. Der Deformationsabschnitt 34 ist entsprechend an die Form der Wulst 28 angepasst und kann am Wulst 28 flächig anliegen.

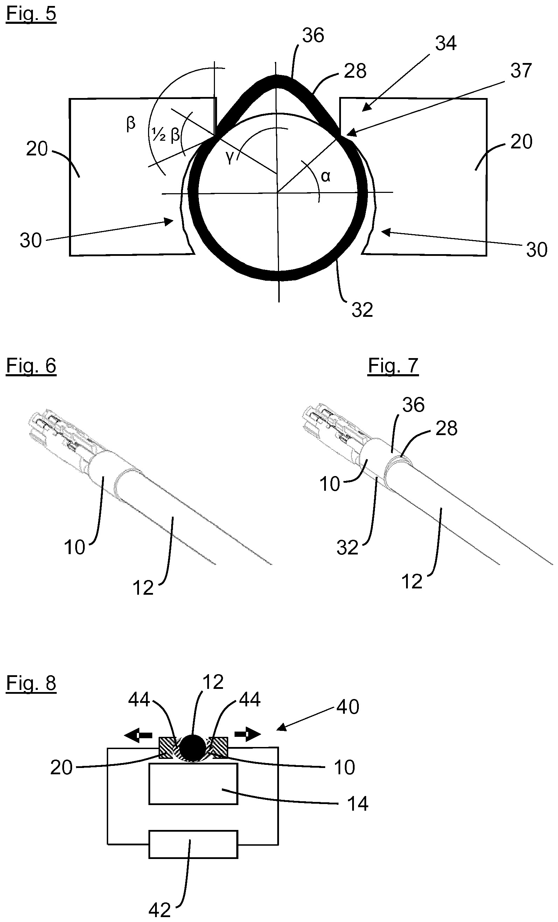

Im Detail ist dies in Fig. 5 gezeigt. Der Winkel α kann so gewählt werden, dass die Kabeltülle 10 über den Kabelumfang gleiten kann. Der Winkel α kann insbesondere Werte zwischen 30° und 80° annehmen.

Die Winkel β und γ können so gewählt werden, dass die Schubkanten 37 genügend Halt finden. Während der Formung der Wulst 28 sollen diese die Kabeltülle 10 jedoch vorzugsweise nicht durchtrennen. Beispielsweise kann der Winkel β einen Wert zwischen 60° und 100° haben. Der Winkel γ kann vorzugsweise einen Wert zwischen 10° und 90° haben.

Die Schubkanten 37 stoßen die Kabeltülle 10 im oberen Bereich zusammen, während die Kabeltülle 10 im unteren Bereich gedehnt wird. Insbesondere kann die Schubkante 37 in der oberen Hälfte, vorzugsweise im oberen Drittel oder oberen Viertel, der Kabeltülle 10 angreifen.

Das Kabel 12 kann den Schubkanten 37 nach unten hin ausweichen. Falls diese Bewegung limitiert würde, könnten die Schubkanten 37 der Klemmbacken 20 das Kabel 12 deformieren oder gar beschädigen.

Die Schubkanten 37 selbst haben vorzugsweise keine Schneidfunktion, obgleich dies grundsätzlich möglich ist. Bei scharfkantigen Schubkanten 37 besteht die Gefahr, dass diese das Schirmgeflecht verletzen.

Grundsätzlich ist denkbar, dass die Klemmbacken 20, insbesondere oberhalb der Schubkanten 37 eine Schneideinheit, z.B. einen scharfkantigen Vorsprung, aufweisen. Die Klemmbacken 20 können hierbei selbst die Kabeltülle im Schneidabschnitt 36 aufschneiden. In dieser Variante erfüllen die Klemmbacken 20 somit eine Doppelfunktion.

Insbesondere können sich die Klemmbacken 20 nicht nur horizontal Bewegen. Ausgehend von der relativen Bewegung der Klemmbacken 20 und des Kabels 12 ist es auch denkbar, dass das Kabel 12 auf einer Arbeitsfläche aufliegt und sich die Klemmbacken 20 diagonal nach oben aufeinander zu bewegen.

Für das vorliegende Verfahren wird insbesondere gewährleistet, dass die Formung der Wulst 28 das Kabel 12 nicht deformiert und/oder beschädigt.

In Fig. 6 ist eine Kabeltülle 10 eines Kabels 12 im ungeklemmten Zustand gezeigt. Wird die Kabeltülle 10 geklemmt, bildet sich die Wulst 28, wie in Fig. 7 dargestellt ist.

Die in Fig. 2 gezeigte Schneideinheit 22 wird nun in Pfeilrichtung zur Beabstandungsvorrichtung 16 bewegt. Die nach oben gerichtete Schneide 24 steigt schräg an, d.h. der Schneidabschnitt 36 wird von unten her aufgeschnitten, damit das eigentliche Kabel 12 nicht verletzt wird.

An der Unterseite der Schneide 24 ist eine als Dorn 38 ausgebildete Einfädelhilfe angeordnet. Einerseits kann die Schneide 24 durch die Einfädelhilfe 38 leicht in den Zwischenraum zwischen dem Schneidabschnitt 36 und dem Kabel 12 eingefädelt werden. Andererseits schützt die Einfädelhilfe 38 das Kabel 12 vor Beschädigungen durch die Schneide 24.

Um ein sicheres Einfädeln zu gewährleisten, kann die Höhe der Schneideinheit 22 beispielsweiße über eine vertikale Führung mit einer Rändelschraube eingestellt werden. Auch ist z.B. ein Rastmechanismus denkbar.

Die Schneide 24 schneidet die Kabeltülle 10 im Schneidabschnitt 36 auf, indem die Schneideinheit 22 durch den Pneumatikzylinder 26 auf das Kabel 12 zu gefahren wird. Nach dem Aufschneiden fährt die Schneideinheit 22 zurück in die Grundposition.

Wie in Fig. 8 dargestellt ist, umfasst die Abtrennvorrichtung eine Tüllenhalterung 40. Die Tüllenhalterung 40 weist eine Unterdruckeinrichtung 42 auf, welche ein Vakuum erzeugt.

Die Klemmbacken 20 weisen kleine Bohrungen auf, durch die Luft eingesaugt wird. Dadurch entsteht ein Unterdruck zwischen den beiden Klemmbacken 20 und der Kabeltülle 10. Durch diesen Druckunterschied bleiben die beiden Schenkel 44 der Kabeltülle 10 auch nach dem Aufschneiden der Wulst 28 an den Klemmbacken 20 haften.

Öffnen sich die beiden Klemmbacken 20, wie mit den Pfeilen dargestellt ist, so werden durch den Druckunterschied bzw. durch das erzeugte Vakuum auch die beiden Schenkel 44 auseinandergezogen. Die Klemmbacken 20 bilden bei dieser Ausführungsform einen Teil der Tüllenhalterung 40.

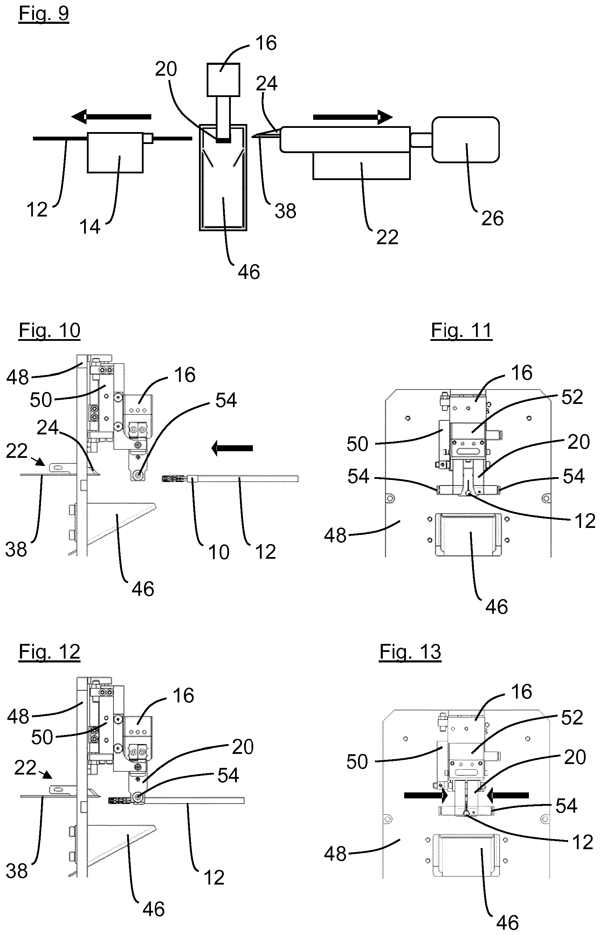

Wie in Fig. 9 gezeigt ist, kann die Kabelhaltevorrichtung 14 zusammen mit dem Kabel 12 wieder in die Grundstellung zurückgefahren werden. Bevor, wie in Fig. 9 gezeigt, die Kabelhaltevorrichtung 14 zusammen mit dem Kabel 12 wieder horizontal in die Grundstellung fährt, senken sich die Klemmbacken 20 mit der Kabeltülle 10 ab.

Die Kabeltülle 10 ist somit vom Kabel 12 entfernt. Nach dem Ausgleichen des Unterdrucks in den Klemmbacken 20 fällt die Kabeltülle 10 in einen Behälter 46. Auf eine explizite Absaugung kann daher verzichtet werden.

Anschließend wird die Kabelhaltevorrichtung 14 zusammen mit dem Kabel 12 horizontal wieder in die Grundstellung zurückgefahren.

Die Fig. 10 bis 19 zeigen beispielhaft die verschiedenen Schritte beim Abtrennen der Kabeltülle 10 vom Kabel 12, wobei links Seitenansichten und rechts jeweils dazugehörige Vorderansichten dargestellt sind.

Die Beabstandungsvorrichtung 16 kann an einer Grundplatte 48 befestigt sein. Vorzugsweise ist die Beabstandungsvorrichtung 16 höhenverstellbar ausgebildet, z.B. mittels eines Hubzylinders 50.

Zum Öffnen und Schließen der Klemmbacken 20 kann ein Zylinder 52 vorgesehen sein. Ferner können Pneumatikanschlüsse 54, z.B. ein Luftanschlüsse, an den Klemmbacken 20 angeordnet sein.

In den Fig. 10 und 11 ist der Grundzustand dargestellt. Der Hubzylinder 50 liegt dabei an einer oberen Hubbegrenzung an.

Der Zylinder 52 mit den Klemmbacken 20 ist so weit geöffnet, dass das Kabel 12 samt Kabeltülle 10 zwischen die Klemmbacken 20 eingeführt werden kann.

Der Pneumatikanschluss 54 der Klemmbacken 20 ist deaktiviert.

Die Schneide 24 mit der Einfädelhilfe 38 befindet sich außerhalb des Bearbeitungsbereichs, kann jedoch durch diverse Vorrichtungen der Schneideinheit 22 für den eigentlichen Schnitt der Kabeltülle10 ein- bzw. ausgefahren werden.

Das Kabel 12 mit der Kabeltülle 10 befindet sich außerhalb des Bearbeitungsbereichs. Zur Einführung des Kabels 12 ist beispielsweiße eine pneumatisch angetriebene Kabelhaltevorrichtung 14 vorgesehen.

Das Kabel 12 wird in Pfeilrichtung zur Beabstandungsvorrichtung 16 bewegt.

Wie in den Fig. 12 und 13 dargestellt ist, wird das Kabel 12 in die Beabstandungsvorrichtung 16 eingeführt und von den Klemmbacken 20 eingeklemmt, wenn sich das Kabel 12 in der richtigen Position befindet. Dabei bildet sich in der Kabeltülle 10 eine Wulst 28.

Gleichzeitig wird begonnen, zwischen den Klemmbacken 20 und der Kabeltülle 10 über die Pneumatikanschlüsse 54 einen Unterdruck zu erzeugen.

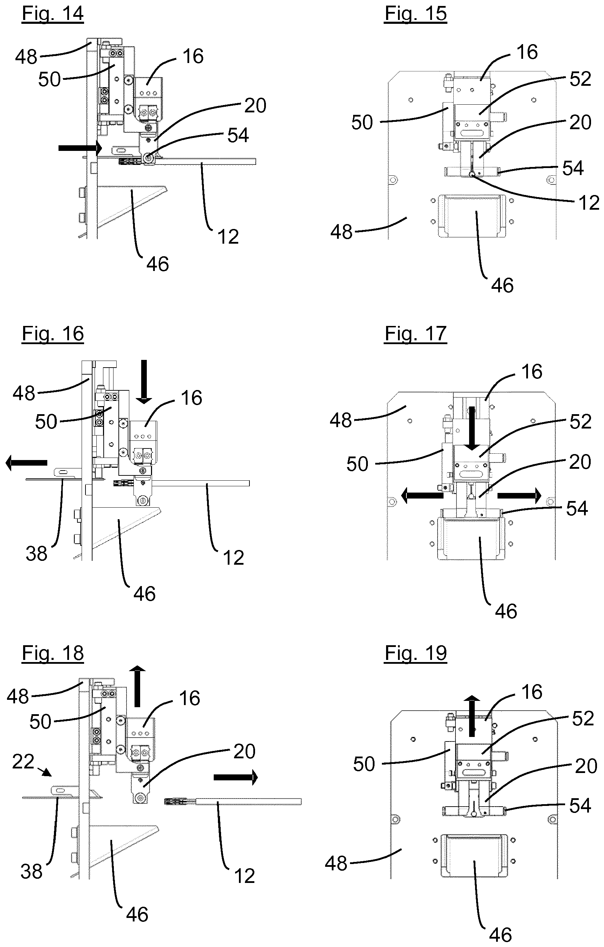

Ab diesem Zeitpunkt kann die Schneide 24 mit der Einfädelhilfe 38 in die Wulst 28 eingeführt werden, wie in Fig. 14 und 15 gezeigt ist.

Beim Einführen schneidet die Schneide 24 die Kabeltülle 10 durch. Ist die Kabeltülle 10 vollständig durchtrennt, werden die beiden Schenkel 44 der Kabeltülle 10 aufgrund der Druckdifferenz weiter an die Kontur der Klemmbacken 20 gezogen.

Wie in den Fig. 16 und 17 gezeigt ist, fahren die beiden Klemmbacken 20 nun wieder auseinander und öffnen somit die Kabeltülle 10.

Mit der geöffneten Kabeltülle 10 wird nun über den vertikalen Hubzylinder 50 die Beabstandungsvorrichtung 16 nach unten gefahren. Somit wird die aufgeschnittene Kabeltülle 10 vom Kabel 12 entfernt und nach Umkehrung des Druckluftunterschieds zwischen der Kabeltülle 10 und den Klemmbacken 20 in den Behälter 46 befördert.

Wie in Fig. 18 und 19 dargestellt ist, wird das Kabel 12 schließlich aus der Beabstandungsvorrichtung 16 entfernt und alle Achsen fahren in ihre Grundstellungen zurück.

Alternativ können die Klemmbacken 20 in einer Art Split-Cycle-Modus zuerst halb geöffnet und erst nach dem Entfernen des Kabels 12 ganz geöffnet werden.

Die Abtrennvorrichtung kann aufgrund der Kompaktheit auch bei bereits vorhandenen Stationen nachgerüstet werden. Da die Entfernung der Kabeltülle 10 automatisiert erfolgt, entfällt ein manuell zu bedienender Arbeitsschritt. Auch wird durch das Bilden einer Wulst 28 und durch den automatischen Schnitt mittels der Schneide 24 inklusive Einfädelhilfe 38 sichergestellt, dass sowohl der Kabelmantel als auch das Schirmgeflecht nicht verletzt werden.

Ein weiterer Vorteil dieser Abtrennvorrichtung ist die erreichbare Taktzeit von beispielsweise weniger als 9 Sekunden.

### Bezuqszeichenliste

- 10: Kabeltülle
- 12: Kabel
- 14: Referenzklotz, Kabelhaltevorrichtung
- 16: Beabstandungsvorrichtung
- 18: Parallelgreifer, Klemmvorrichtung
- 20: Klemmbacken
- 22: Schneideinheit
- 24: Schneide
- 26: Antrieb, Pneumatikzylinder
- 28: Wulst
- 30: Aufnahmebereich
- 32: unbeabstandeter Kabeltüllenbereich
- 34: Deformationsabschnitt
- 36: Schneidabschnitt
- 37: Schubkante
- 38: Dorn, Einfädelhilfe
- 40: Tüllenhalterung
- 42: Unterdruckeinrichtung
- 44: Schenkel
- 46: Behälter
- 48: Grundplatte
- 50: Hubzylinder
- 52: Zylinder
- 54: Pneumatikanschluss, Luftanschluss

- α, β, γ: Winkel

## Patentansprüche

1. Abtrennvorrichtung zum Abtrennen einer Kabeltülle (10) von einem Kabel (12), umfassend
eine Schneideinheit (22) und
eine Beabstandungsvorrichtung (16), die dazu ausgebildet ist, zumindest einen Schneidabschnitt (36) der Kabeltülle (10) vom Kabel (12) mit einem Zwischenraum zu beabstanden, wobei
die Schneideinheit (22) dazu ausgebildet ist, den Schneidabschnitt (36) der Kabeltülle (10) aufzuschneiden, wobei eine Schneide (24) der Schneideinheit (22) schräg orientiert ist und vom Kabel (12) weg zeigt, und wobei die Schneideinheit (22) in den Zwischenraum zwischen der Kabeltülle (10) und dem Kabel (12) eingeführt werden kann, um die Kabeltülle (10) von innen nach außen aufzuschneiden.

2. Vorrichtung nach Anspruch 1,
**dadurch gekennzeichnet,**
**dass** die Beabstandungsvorrichtung (16) eine Klemmvorrichtung (18) umfasst.

3. Vorrichtung nach Anspruch 2,
**dadurch gekennzeichnet,**
**dass** die Klemmvorrichtung (18) wenigstens zwei Klemmbacken (20) umfasst.

4. Vorrichtung nach Anspruch 3,
**dadurch gekennzeichnet,**
**dass** die Klemmvorrichtung (18) für jede Klemmbacke (20) einen, insbesondere verstellbaren, Anschlag aufweist.

5. Vorrichtung nach einem der Ansprüche 2 bis 4,
**dadurch gekennzeichnet,**
**dass** die Klemmvorrichtung (18), vorzugsweise eine oder beide Klemmbacken (20), einen Aufnahmebereich (30) zur Aufnahme eines unbeabstandeten Kabeltüllenbereichs (32) und einen Deformationsabschnitt (34) zum Deformieren des Schneidabschnitts (36) aufweist.

6. Vorrichtung nach einem der vorhergehenden Ansprüche,
**dadurch gekennzeichnet,**
**dass** eine Kabelhaltevorrichtung (14) vorgesehen ist, welche relativ zur Beabstandungsvorrichtung (16) bewegbar ist, insbesondere pneumatisch, hydraulisch, elektrisch und/oder mechanisch.

7. Vorrichtung nach einem der vorhergehenden Ansprüche,
**dadurch gekennzeichnet,**
**dass** die Schneideinheit (22) relativ zur Beabstandungsvorrichtung (16) bewegbar ist, insbesondere pneumatisch, hydraulisch, elektrisch und/oder mechanisch.

8. Vorrichtung nach einem der vorhergehenden Ansprüche,
**dadurch gekennzeichnet,**
**dass** die Schneideinheit (22) höhenverstellbar ausgebildet ist.

9. Vorrichtung nach einem der vorhergehenden Ansprüche,
**dadurch gekennzeichnet,**
**dass** die Schneideinheit (22) eine, insbesondere als Dorn ausgebildete, Einfädelhilfe (38) umfasst.

10. Vorrichtung nach einem der vorhergehenden Ansprüche,
**dadurch gekennzeichnet,**
**dass** der Abstand der Schneide (24) von einem vorderen Bereich einer Einfädelhilfe (38) zu einem hinteren Bereich der Einfädelhilfe (38) zunimmt.

11. Vorrichtung nach einem der vorhergehenden Ansprüche,
**dadurch gekennzeichnet,**
**dass** eine Tüllenhalterung (40) vorgesehen ist, die dazu ausgebildet ist, die aufgeschnittene Kabeltülle (10) auseinanderzuziehen und/oder in einer auseinandergezogenen Position zu halten.

12. Vorrichtung nach Anspruch 11,
**dadurch gekennzeichnet,**
**dass** die Tüllenhalterung (40) eine Unterdruckeinrichtung (42) umfasst.

13. Vorrichtung nach Anspruch 11 oder 12,
**dadurch gekennzeichnet,**
**dass** zumindest ein Teil der Tüllenhalterung (40), insbesondere eine Klemmvorrichtung (18), höhenverstellbar ausgebildet ist.

14. Vorrichtung nach einem der vorhergehenden Ansprüche,
**dadurch gekennzeichnet,**
**dass** die Beabstandungsvorrichtung (16), vorzugsweise eine Klemmbacke (20) einer Klemmvorrichtung (18), zumindest eine Öffnung aufweist, insbesondere wobei die Öffnung mit einer Unterdruckeinrichtung (42) verbunden oder verbindbar ist.

15. Verfahren zum Abtrennen einer Kabeltülle (10) von einem Kabel (12) mit einer Abtrennvorrichtung nach einem der vorhergehenden Ansprüche, bei dem
die Beabstandungsvorrichtung (16) zumindest einen Schneidabschnitt (36) der Kabeltülle (10) vom Kabel (12) beabstandet, und
die Schneideinheit (22) in den Zwischenraum zwischen der Kabeltülle (10) und dem Kabel (12) eingeführt wird und den Schneidabschnitt (36) der Kabeltülle (10) von innen nach außen aufschneidet.

## Claims

1. A separating device for separating a cable sleeve (10) from a cable (12), comprising
a cutting unit (22) and
a spacing device (16), which is configured to at least create a space between a cutting portion (36) of the cable sleeve (10) and the cable (12), wherein the cutting unit (22) is configured for cutting open the cutting portion (36) of the cable sleeve (10), wherein
a cutting edge (24) of the cutting unit (22) is obliquely oriented and faces away from the cable (12), and wherein
the cutting unit (22) can be inserted into the space between the cable sleeve (10) and the cable (12) so as to cut open the cable sleeve (10) from the inside out.

2. A device according to claim 1,
**characterised in that**
the spacing device (16) comprises a clamping device (18).

3. A device according to claim 2,
**characterised in that**
the clamping device (18) comprises at least two clamping jaws (20).

4. A device according to claim 3,
**characterised in that**
the clamping device (18) has a stop, especially an adjustable stop, for each clamping jaw (20).

5. A device according to any of claims 2 to 4,
**characterised in that**
the clamping device (18), preferably one or both clamping jaws (20), comprises a receiving area (30) for receiving an un-spaced cable-sleeve portion (32) and a deforming section (34) for deforming the cutting portion (36).

6. A device according to any of the preceding claims,
**characterised in that**
a cable-holding device (14) is provided which is movable relative to the spacing device (16), especially pneumatically, hydraulically, electrically and/or mechanically.

7. A device according to any of the preceding claims,
**characterised in that**
the cutting unit (22) is movable relative to the spacing device (16), especially pneumatically, hydraulically, electrically and/or mechanically.

8. A device according to any of the preceding claims,
**characterised in that**
the cutting unit (22) is configured to be vertically adjustable.

9. A device according to any of the preceding claims,
**characterised in that**
the cutting unit (22) comprises a threading aid (38), especially configured in the form of a mandrel.

10. A device according to any of the preceding claims,
**characterised in that**
the distance of the cutting edge (24) from a front region of a threading aid (38) to a rear region of the threading aid (38) increases.

11. A device according to any of the preceding claims,
**characterised in that**
a sleeve holder (40) is provided which is configured to pull apart and/or hold the cut-open cable sleeve (10) in a pulled-apart position.

12. A device according to claim 11,
**characterised in that**
the sleeve holder (40) comprises a vacuum device (42).

13. A device according to claim 11 or 12,
**characterised in that**
at least a part of the sleeve holder (40), especially a clamping device (18), is configured to be vertically adjustable.

14. A device according to any of the preceding claims,
**characterised in that**
the spacing device (16), preferably a clamping jaw (20) of a clamping device (18), has at least one opening, especially wherein the opening is connected or connectable to a vacuum device (42).

15. A method of separating a cable sleeve (10) from a cable (12) comprising a separating device according to any of the preceding claims, in which the spacing device (16) creates a space between at least a cutting portion (36) of the cable sleeve (10) and the cable (12), and the cutting unit (22) is inserted into the space between the cable sleeve (10) and the cable (12) and cuts open the cutting portion (36) of the cable sleeve (10) from the inside out.

## Revendications

1. Dispositif de séparation pour séparer un passe-câble (10) depuis un câble (12), comprenant
une unité de coupe (22) et
un dispositif d'espacement (16) réalisé pour espacer au moins une portion à découper (36) du passe-câble (10) avec un espace intermédiaire par rapport au câble (12),
dans lequel
l'unité de coupe (22) est réalisée pour ouvrir par découpe la portion à découper (36) du passe-câble (10), un tranchant (24) de l'unité de coupe (22) étant orienté en oblique et étant dirigé en éloignement du câble (12), et
l'unité de coupe (22) peut être introduire dans l'espace intermédiaire entre le passe-câble (10) et le câble (12) pour ouvrir par découpe le passe-câble (10) de l'intérieur vers l'extérieur.

2. Dispositif selon la revendication 1,
**caractérisé en ce que**
le dispositif d'espacement (16) comprend un dispositif de serrage (18).

3. Dispositif selon la revendication 2,
**caractérisé en ce que**
le dispositif de serrage (18) comprend au moins deux mâchoires de serrage (20).

4. Dispositif selon la revendication 3,
**caractérisé en ce que**
le dispositif de serrage (18) comporte une butée, en particulier déplaçable, pour chaque mâchoire de serrage (20).

5. Dispositif selon l'une des revendications 2 à 4,
**caractérisé en ce que**
le dispositif de serrage (18), de préférence une ou deux mâchoires de serrage (20), présente(nt) une zone de réception (30) pour recevoir une zone de passe-câble (32) non espacée, et une portion de déformation (34) pour déformer la portion à découper (36).

6. Dispositif selon l'une des revendications précédentes,
**caractérisé en ce que**
il est prévu un dispositif de maintien de câble (14) qui est mobile par rapport au dispositif d'espacement (16), en particulier par voie pneumatique, hydraulique, électrique et/ou mécanique.

7. Dispositif selon l'une des revendications précédentes,
**caractérisé en ce que**
l'unité de coupe (22) est mobile par rapport au dispositif d'espacement (16), en particulier par voie pneumatique, hydraulique, électrique et/ou mécanique.

8. Dispositif selon l'une des revendications précédentes,
**caractérisé en ce que**
l'unité de coupe (22) est réalisée de manière déplaçable en hauteur.

9. Dispositif selon l'une des revendications précédentes,
**caractérisé en ce que**
l'unité de coupe (22) comprend une aide à l'enfilage (38), réalisée en particulier sous forme de mandrin.

10. Dispositif selon l'une des revendications précédentes,
**caractérisé en ce que**
la distance du tranchant (24) augmente depuis une zone avant d'une aide à l'enfilage (38) vers une zone arrière de l'aide à l'enfilage (38).

11. Dispositif selon l'une des revendications précédentes,
**caractérisé en ce que**
il est prévu un support de passe-câble (40) réalisé pour écarter le passe-câble(10) ouvert par découpe et/ou pour le maintenir dans une position écartée.

12. Dispositif selon la revendication 11,
**caractérisé en ce que**
le support de passe-câble (40) comprend un dispositif de mise sous dépression (42).

13. Dispositif selon la revendication 11 ou 12,
**caractérisé en ce que**
une partie au moins du support de passe-câble (40), en particulier un dispositif de serrage (18), est réalisée de manière déplaçable en hauteur.

14. Dispositif selon l'une des revendications précédentes,
**caractérisé en ce que**
le dispositif d'espacement (16), de préférence une mâchoire de serrage (20) d'un dispositif de serrage (18), présente au moins une ouverture, en particulier l'ouverture étant ou pouvant être en communication avec un dispositif de mise sous dépression (42).

15. Procédé pour séparer un passe-câble (10) depuis un câble (12) au moyen d'un dispositif de séparation selon l'une des revendications précédentes, dans lequel
le dispositif d'espacement (16) vient espacer au moins une portion à découper (36) du passe-câble (10) par rapport au câble (12), et
l'unité de coupe (22) est introduire dans l'espace intermédiaire entre le passe-câble (10) et le câble (12) et ouvre par découpe la portion à découper (36) du passe-câble (10) depuis l'intérieur vers l'extérieur.
